**Europäisches Patentamt**

**European Patent Office**

**Office européen des brevets**

(19)

(11) Veröffentlichungsnummer: **0 053 243**
**A1**

(12) ## EUROPÄISCHE PATENTANMELDUNG

(21) Anmeldenummer: **81108042.3**

(22) Anmeldetag: **07.10.81**

(51) Int. Cl.³: **H 04 B 12/04**

(30) Priorität: **27.11.80 DE 3044765**

(43) Veröffentlichungstag der Anmeldung: **09.06.82**
**Patentblatt 82/23**

(84) Benannte Vertragsstaaten: **AT BE CH DE FR GB IT LI NL SE**

(71) Anmelder: **SIEMENS AKTIENGESELLSCHAFT Berlin und München, Postfach 22 02 61, D-8000 München 22 (DE)**

(72) Erfinder: **Brandl, Hans, Dipl.-Ing., Ottweilerstrasse 15, D-8000 München 83 (DE)**

(54) **Differenz-Digitalmodulations- bzw. -demodulationssystem mit analogsignalabhängigem Abtasttakt.**

(57) Zur Analog/Digital-Umsetzung wird das Analogsignal sowohl einem abtasttaktgesteuerten ersten Digitalmodulator (MO) als auch einem zweiten prädiktiv arbeitenden Digitalmodulator (TM) zugeführt. Aus dem Schätzfehlersignal (f) des zweiten Digitalmodulators (TM) wird ein Steuersignal (s) für den Abtasttaktgenerator (TG') des ersten Digitalmodulators (MO) erzeugt, so daß dessen Taktfrequenz bei zunehmendem Schätzfehler erhöht und bei abnehmendem Schätzfehler erniedrigt wird. Bei der Digitalsignalübertragung oder -speicherung werden die Digitalsignalbits jeweils zusammen mit einer codiert die jeweilige Abtasttaktfrequenz angebenden Bitgruppe blockweise modulatorseitig abgegeben bzw. demodulatorseitig aufgenommen. Für eine Analogsignalpause wird lediglich ein codiert die Pausenlänge angebender Signalblock abgegeben bzw. aufgenommen.

SIEMENS AKTIENGESELLSCHAFT
Berlin und München

0053243

Unser Zeichen
VPA 80 P 6 2 2 9 E

Differenz-Digitalmodulations- bzw. -demodulationssystem
mit analogsignalabhängigem Abtasttakt

In Differenz-Digitalmodulationssystemen, wie $\Delta$M-Systemen oder DPCM-Systemen, in denen sendeseitig in einem Digitalmodulator jeweils in Abhängigkeit von der Differenz zwischen einem Abtastwert eines Eingangs-Analogsignals und einem im Prinzip durch Summation sämtlicher vorausgegangener Differenzwerte gebildeten, sich von Abtastzeitpunkt zu Abtastzeitpunkt gestuft (quantisiert) ändernden Vorhersagewert ein Digitalsignalwort erzeugt wird und in einem Rückkopplungsweg des Digitalmodulators sowie empfangsseitig in einem Digitaldemodulator nach Maßgabe der Digitalsignalworte ein Integrator eines sog. Digitaldecoders entladen oder aufgeladen wird, ergibt sich im üblichen Falle äquidistanter Abtastzeitpunkte das Problem, daß bei relativ kleiner Abtastperiode sich zwar nur kleine Differenzen zwischen Abtast- und Vorhersagewert, d.h. kleine Codierfehler, auch bei steilem Verlauf des Eingangs-Analogsignals ergeben, daß aber die hohe Modulationstaktrate eine entsprechende Übertragungskanalkapazität (bei Nachrichtenübertragung) bzw. Speicherkapazität (bei Nachrichtenspeicherung) erfordert, wogegen bei relativ großer Abtastperiode die Modulationstaktrate zwar entsprechend niedrig ist, jedoch die Vorhersagewerte einem steilen Verlauf des Eingangs-Analogsignals nicht genau genug folgen können und damit größere Codierfehler mit sich bringen.

Spr 1 Kel /25.11.80

0053243

Mit der Absicht, eine bessere Ausnutzung der Übertragungskanalkapazität zu erzielen, ist man bei einem (aus ECJ
49(1966)3, 34...42) bekannten sog. asynchronen Deltamodulationssystem von einer Äquidistanz der Abtastzeitpunkte
abgegangen, indem man ein neues Digitalsignalwort
(ΔM-Bit) jeweils phasenrichtig in einem solchen Augenblick gebildet hat, in dem sich das Analogsignal um einen
vorgegebenen Betrag geändert hat. Ein solches asynchrones
Digitalmodulationssystem bedingt indessen auch demodulatorseitig eine phasenrichtige, d.h. die zeitliche Distanz
der ΔM-Bits aufrechterhaltende Signalbereitstellung,
was eine Einfügung der Digitalsignalelemente in ein
davon abweichendes starres Raster, wie sie bei einer
Nachrichtenübertragung etwa mit der Einbindung in den
Pulsrahmen eines Zeitmultiplexübertragungssystems oder
bei einer Nachrichtenspeicherung mit der Abspeicherung
in einem Speicher verbunden ist, jedenfalls bei begrenzter
und zugleich gut auszunutzender Übertragungskanal- bzw.
Speicher-Kapazität ausschließt.

Der Erfindung liegt nun die Aufgabe zugrunde, in einem
Differenz-Digitalmodulations- bzw. -demodulationssystem
das Prinzip eines analogsignalabhängigen Abtasttaktes
in technisch vorteilhafter und wirtschaftlich tragbarer
Weise mit der Möglichkeit zu verbinden, die Digitalsignalelemente auch in ein solches starres Raster einfügen zu
können.

Die Erfindung betrifft ein Differenz-Digitalmodulations-
bzw. -demodulationssystem mit analogsignalabhängigem
Abtasttakt; dieses System ist erfindungsgemäß dadurch
gekennzeichnet,
daß bei einer Analog/Digital-Umsetzung das Analogsignal
außer einem dieses in das zu übertragende Digitalsignal
umsetzenden, abtasttaktgesteuerten ersten Digitalmodulator auch einem zweiten prädiktiv arbeitenden Digitalmodulator zugeführt wird, aus dessen Schätzfehlersignal
ein Steuersignal
für den Abtasttaktgenerator des ersten Digitalmodulators

0053243

gebildet wird, durch das die Taktfrequenz des Abtasttaktgenerators des ersten Digitalmodulators bei zunehmendem
Schätzfehler erhöht und umgekehrt bei abnehmendem Schätzfehler wieder erniedrigt wird, wobei die vom ersten Digitalmodulator aus dem Analogsignal gebildeten Digitalsignalbits jeweils zusammen
mit einer codiert die jeweilige Abtasttaktfrequenz angebenden Bitgruppe signalblockweise abgegeben werden,
und/oder daß bei einer Digital/Analog-Umsetzung die
Digitalsignalbits jeweils zusammen mit einer codiert die
jeweilige Abtasttaktfrequenz angebenden Bitgruppe signalblockweise vom Digitaldemodulator aufgenommen werden,
wobei nach Auffächerung von Digitalsignalbits und Bitgruppe letztere über einen Taktfrequenzspeicher
den Taktgenerator des Digitaldemodulators steuert, dessen
Digitalsignaleingang die Digitalsignalbits zur Umsetzung
in das Analogsignal zugeführt werden.

Die Erfindung bringt den Vorteil mit sich, die den Abtastproben eines Analogsignals entsprechenden Amplituden- und
Zeitinformationen unter wesentlicher Reduktion des scheinbaren Nachrichtenflusses bereitstellen zu können, was sich
bei einer Nachrichtenspeicherung in einem entsprechend
reduzierten Bedarf an Speicherkapazität auswirkt und bei
Nachrichtenübertragung die Möglichkeit eröffnet, mit
entsprechend reduzierter Übertragungskapazität auszukommen, indem in weiterer Ausgestaltung der Erfindung
die Signalblocks einem Übertragungskanal konstanter
Bitrate über einen Pufferspeicher zugeführt bzw. entnommen werden.

Der scheinbare Nachrichtenfluß kann zusätzlich dadurch
reduziert werden, daß in weiterer Ausgestaltung der
Erfindung für eine Analogsignalpause lediglich ein
Signalblock abgegeben bzw. aufgenommen wird, der codiert

0053243

die Pausenlänge angebende Digitalsignalbits zusammen mit einer anstelle einer Abtasttaktfrequenz eine Pause signalisierenden Bitgruppe enthält.

Weitere Merkmale der Erfindung ergeben sich aus der nachfolgenden näheren Erläuterung der Erfindung anhand der Zeichnung. Dabei zeigt
Fig.1 ein Ausführungsbeispiel für ein Differenz-Digitalmodulationssystem gemäß der Erfindung;
Fig.2 zeigt ein Ausführungsbeispiel für ein Differenz-Digitaldemodulationssystem gemäß der Erfindung. In Fig.3 ist ein Signalblock angedeutet, wie er in einem Differenz-Digitalmodulations- bzw. -demodulationssystem gemäß der Erfindung Anwendung finden kann.

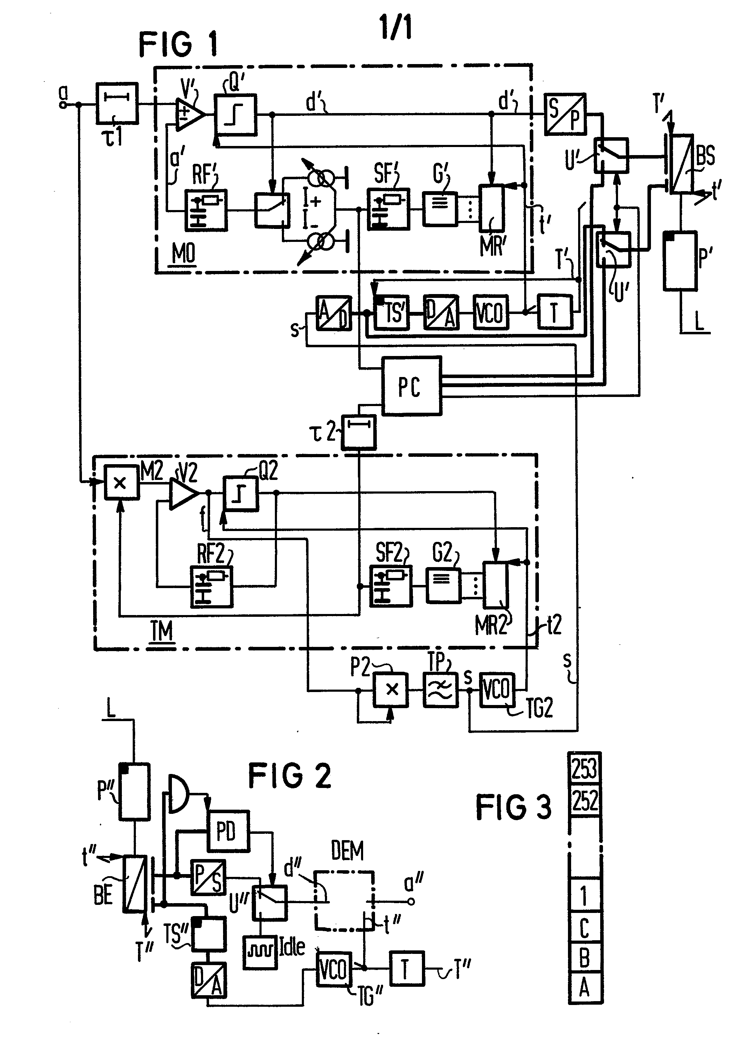

In Fig.1 ist schematisch in zum Verständnis der Erfindung erforderlichem Umfang ein Ausführungsbeispiel eines Differenz-Digitalmodulationssystems gemäß der Erfindung dargestellt. Dieses Digitalmodulationssystem weist zunächst einen Digitalmodulator MO auf, der in einem ihm über eine Abtasttaktleitung t' zugeführten Abtasttakt (Modulationstakt) ein auf einer Eingangsleitung a auftretendes Analogsignal in ein auf der Digitalmodulator-Ausgangsleitung d' auftretendes Digitalsignal umsetzt. In Fig.1 ist dazu angedeutet, daß der Digitalmodulator MO durch einen Deltamodulator gebildet und zwar durch einen adaptiven Deltamodulator (CVSD-Modulator), wozu der Digitalmodulator MO in prinzipiell bekannter Weise mit einem Vergleicher V', der eingangsseitig zum einen mit der Analogsignal-Eingangsleitung a und zum anderen mit der Ausgangsleitung a' eines Analogsignal-Rekonstruktionsfilters RF' verbunden ist, und mit einer nachfolgenden, abtasttaktgesteuerten Entscheiderschaltung (Quantisierschaltung) Q' sowie mit einem von der das $\Delta$M-Signal führenden Modulator-Ausgangsleitung d' zu der Rekonstruktionsfilter-Ausgangsleitung a' führenden $\Delta$M-Decoder aufgebaut sein mag; der $\Delta$M-Decoder möge in ebenfalls prinzipiell bekannter Weise mit einem Impulsreihenanalysator, der aus einem im Modulationstakt von den Digitalsignalbits beaufschlagten Schieberegister MR' und einem damit verbundenen ÄQUIVALENZ-Glied G' bestehen kann, mit einem nachfolgenden, die Ausgangssignale des ÄQUIVALENZ-Gliedes G' integrierenden und damit ein Maß für die Schrittweite, d.h. für die Größe des vom $\Delta$M-Decoder zum jeweils vergangenen Signalwert zu addierenden Spannungsunterschiedes, bildenden sog. Silbenfilter SF', mit einer von dessen Ausgangssignal gesteuerten bipolaren Stromquellenschaltung $I_+$, $I_-$ und mit dem von letzterer im Takte der $\Delta$M-Bits mit mehr oder weniger großer Amplitude umgeladenen Rekonstruktionsfilter SF' aufgebaut sein. Die Quantisierschaltung Q' und das Schieberegister MR' werden dabei über die Abtasttaktleitung t' mit dem von einem Abtasttaktgenerator TG' erzeugten, analogsignalabhängigen Abtasttakt gesteuert.

Es sei hier bemerkt, daß in Abweichung von der Darstellung in Fig.1 der Differenz-Digitalmodulator MO nicht an eine Realisierung in Form eines adaptiven $\Delta$-Modula-tors gebunden ist, vielmehr beispielsweise auch als linearer $\Delta$-Modulator oder auch als linearer oder adaptiver Delta-Pulscodemodulator ausgebildet sein kann, was jedoch in der Zeichnung nicht näher dargestellt ist, da solche Differenz-Digitalmodulatoren ebenfalls prinzipiell bekannt sind.

Das dem Digitalmodulator MO zur Umsetzung in ein Digitalsignal zugeführte Analogsignal wird außerdem auch einem zweiten prädiktiv arbeitenden Digitalmodulator TM zugeführt, der im Ausführungsbeispiel nach Fig.1 ebenfalls durch einen adaptiven $\Delta$-Modulator gebildet ist. Dieser CVSD-Modulator TM ist wiederum mit einem eingangsseitig mit der Ausgangsleitung eines Analogsignal-Rekonstruktionsfilters RF2 verbundenen Vergleicher V2 und einer

0053243

nachfolgenden taktgesteuerten Entscheiderschaltung (Quantisierschaltung) Q2 aufgebaut, an die hier der Eingang des Rekonstruktionsfilters RF2 direkt angeschlossen ist, während der Ausgang des dem - wiederum mit einem Schieberegister MR2 und einem ÄQUIVALENZ-Glied G2 aufgebauten - Impulsreihenanalysator nachfolgenden, ebenso wie das Silbenfilter SF' des ersten Digitalmodulators MO eine Filterzeitkonstante in der Größenordnung von etwa 2 ms aufweisenden Silbenfilters SF2 zu einem beispielsweise mit einem Mischer realisierbaren Multiplizierglied M2 führt, über das das Analogsignal dem einen Eingang des Vergleichers V2 zugeführt wird.

Aus dem auf der Ausgangsleitung f des Vergleichers V2 des zweiten Digitalmodulators TM auftretenden Schätzfehlersignal wird nun ein Steuersignal für den Abtasttaktgenerator TG' des ersten Digitalmodulators MO gebildet, durch welches die Taktfrequenz des Abtasttaktgenerators TG' bei zunehmendem Schätzfehler erhöht und umgekehrt bei abnehmendem Schätzfehler erniedrigt wird. Hierzu wird das Schätzfehlersignal in einem Multiplizierglied P2 quadriert, gleichgerichtet und anschließend in einem Tiefpaßfilter TP tiefpaßgefiltert; auf der Tiefpaßfilterausgangsleitung s tritt dann ein entsprechendes Steuersignal für den Abtasttaktgenerator TG' des ersten Digitalmodulators MO auf.

Dieses Steuersignal wird über einen Analog/Digital-Wandler A/D zunächst einem Taktfrequenzspeicher TS' zugeführt, um von da aus über einen Digital/Analog-Wandler D/A den Abtasttaktgenerator TG' des ersten Digitalmodulators MO zu steuern. Dabei wird der Taktfrequenzspeicher TS' über eine Blocktaktleitung T' in einem Blocktakt gesteuert, der aus dem Abtasttakt (Modulationstakt) des ersten

0053243

Digitalmodulators MO mit Hilfe eines Taktuntersetzers T gewonnen werden kann, dessen Taktuntersetzungsverhältnis zweckmäßigerweise so gewählt wird, daß die Blocktaktfrequenz der unteren Grenzfrequenz des umzusetzenden Analogsignals entspricht. Diese untere Grenzfrequenz liegt für Sprache etwa bei 50 Hz, so daß dann die Blocktaktperiode etwa bei 2o ms liegen kann, was bei einer mittleren Abtasttaktperiode von beispielsweise etwa 8o μs (entsprechend einer Digitalsignal-Bitrate von 12,5 kbit/s) zu einem Taktuntersetzungsverhältnis von beispielsweise 1:256 führen mag.

Im Blocktakt, d.h. im Beispiel alle 2o ms, nimmt der Taktfrequenzspeicher TS' den Momentanwert des auf der Steuersignalleitung s auftretenden Steuersignals (in Digitaldarstellung) auf und beaufschlagt damit für die anschließende Blocktaktperiode, d.h. im Beispiel für 2o ms, den Abtasttaktgenerator TG' des ersten Digitalmodulators MO, so daß dessen Abtasttaktfrequenz gegenüber der in den vorangegangenen 2o ms wirksamen Abtasttaktfrequenz bei in den vorangegangenen 2o ms sich ergebender Zunahme des im zweiten Digitalmodulator TM auftretenden Schätzfehlers erhöht und umgekehrt bei Abnahme des Schätzfehlers erniedrigt ist. Damit dabei die Abtasttaktfrequenz des ersten Digitalmodulators MO dem jeweils zu digitalisierendem Analogsignalabschnitt entspricht, wird das Analogsignal dem ersten Digitalmodulator MO über ein Verzögerungsglied τ1 mit einer Verzögerungszeit von beispielsweise ebenfalls etwa 2o ms zugeführt, das die während der Bildung des zugehörigen Taktsteuersignals ablaufende Arbeitszeit überbrückt. Ein solches Verzögerungsglied kann durch eine Eimerkettenschaltung gebildet sein, wie dies prinzipiell bekannt ist; stattdessen kann das Verzögerungsglied aber auch durch eine Kettenschaltung eines Analog/Digital-Wandlers, eines FIFO-(first-in-first-out-)Speichers und eines Digital/Analog-Wandlers gebildet sein.

0053243

Das auf der Steuerleitung s auftretende Steuersignal steuert im Ausführungsbeispiel nach Fig.1 auch direkt den Abtasttaktgenerator TG2 des zweiten Digitalmodulators TM; in Abweichung hiervon ist es aber auch möglich, daß der Abtasttaktgenerator TG2 mit konstanter, hoher Taktrate arbeitet, wobei dann mit der Analog/Digital-Wandlung des auf der Steuerleitung s auftretenden Steuersignals noch eine nichtlineare Steuersignalumsetzung zur Bildung des dann wiederum im Taktfrequenzspeicher TS' eingespeicherten und nach Digital/Analog-Wandlung dem Abtasttaktgenerator TG' des ersten Digitalmodulators MO zugeführten Taktsteuersignals (t') verbunden sein kann. Ohne daß dies in Fig.1 näher dargestellt ist, kann übrigens auch bei einer Taktregelung in einem geschlossenen Regelkreis gemäß Fig.1 mit der Analog/Digital-Wandlung des Steuersignals noch eine (dann lineare) Steuersignalumrechnung zur Bildung eines optimalen Taktsteuersignals verbunden sein.

Um angesichts der Analogsignalabhängigkeit des Abtasttaktes des ersten Digitalmodulators MO auch eine Information über den jeweiligen Abtasttakt zu haben, werden die vom ersten Digitalmodulator MO aus dem auf der Analogsignal-Eingangsleitung a auftretenden Analogsignal gebildeten, auf der Digitalsignal-Ausgangsleitung d' auftretenden Digitalsignalbits jeweils zusammen mit einer codiert die jeweilige Abtasttaktfrequenz (Modulationstaktrate) angebenden Bitgruppe signalblockweise abgegeben:

In Fig.1 ist hierzu angedeutet, daß der Ausgang eines der Digitalsignal-Ausgangsleitung d' nachgeschalteten Serien/Parallel-Wandlers S/P und der Ausgang des dem Taktfrequenzspeicher TS' vorgeschalteten Analog/Digital-Wandlers A/D über eine Umschalteinrichtung U' mit entsprechenden, im Blocktakt (T') entriegelten Eingängen eines als Parallel/Serien-Wandler wirkenden Signalblockregisters BS verbunden sind, in dem im Blocktakt jeweils ein entsprechender Signalblock gebildet wird.

Ein solcher Signalblock ist in Fig.3 angedeutet; er
kann eine codiert die jeweilige Abtasttaktfrequenz
(Modulationstaktrate) angebende Bitgruppe von beispielsweise 3 Bits A, B, C und beispielsweise 253 vom ersten
Digitalmodulator MO aus dem Analogsignal gebildete Digitalsignalbits 1,...252, 253 umfassen. Dabei können solche
Signalblocks neben der die Modulationstaktrate (Abtasttaktfrequenz) angebenden Bitgruppe A,...C jeweils eine
konstante Anzahl von Digitalsignalbits 1,...253 enthalten;
alternativ dazu können die Signalblocks aber auch neben
der die Modulationstaktrate angebenden Bitgruppe jeweils
eine modulationstaktabhängige Anzahl von Digitalsignalbits enthalten. Es sei dazu bemerkt, daß insbesondere
bei einer relativ großen Anzahl von beispielsweise
253 im Signalblock enthaltenen Digitalsignalbits diese
in Abweichung von der zeichnerischer Darstellung
in Fig.1 gegebenenfalls auch seriell, d.h. ohne vorangehende Serien/Parallel-Umsetzung, in das Signalblockregister BS eingegeben werden können.

Vom Signalblockregister BS aus kann der Signalblock
A, B, C, 1,...252, 253 (in Fig.3) dann seriell beispielsweise im Abtasttakt t' abgegeben werden, und zwar bei
Nachrichtenspeicherung direkt an einen entsprechenden
Speicher; bei Nachrichtenübertragung können die Signalblocks einem in Fig.1 durch eine Leitung L angedeuteten
Übertragungskanal konstanter Bitrate über einen Pufferspeicher P' zugeführt werden. Der Pufferspeicher P' kann
dabei eine Pufferspeicherkapazität von beispielsweise
8 Signalblöcken, im Beispiel also von 8 x 256 Bit,
aufweisen, um die im analogsignalabhängigen Blockraster
(T') auftretenden Signalblöcke ohne Informationsverfälschung im Übertragungstakt weiterübertragen zu können.

Dabei kann die erforderliche Pufferspeicherkapazität dadurch gering gehalten werden, daß für eine Analogsignalpause lediglich ein Signalblock abgegeben wird, der codiert die Pausenlänge angebende Digitalsignalbits zusammen mit einer anstelle einer Abtasttaktfrequenz eine Pause signalisierenden Bitgruppe enthält. In Fig.1 ist hierzu angedeutet, daß entsprechende Ausgänge einer Pausencodierschaltung PC über die von der Pausencodierschaltung PC steuerbare Umschalteinrichtung U' an die entsprechenden Eingänge des Signalblockregisters BS anschaltbar sind. Die Pausencodierschaltung PC kann dazu das Ausgangssignal des Silbenfilters SF' des ersten Digitalmodulators MO und(/oder) des Silbenfilters SF2 des zweiten Digitalmodulators TM auswerten: Das Silbenfilterausgangssignal, das beim Deltamodulator die Schrittweite (Stufenhöhe, Deltawert) steuert, geht bei Sprachpausen gegen Null, so daß die Pausencodierschaltung PC daraus mittels einer entsprechenden Schwellwertschaltung ein Pausensignal erhält; die Pausendauer kann etwa mit einem in der Pausencodierschaltung PC vorgesehenen taktgesteuerten Zähler bestimmt werden. Mit Hilfe einer Verzögerungsschaltung $\tau 2$ kann das eine der Pausencodierschaltung PC zugeführte Silbenfilterausgangssignal noch verzögert werden, um eine größere Sicherheit in der Pausenfeststellung zu erzielen. In Fig.1 ist dann angedeutet, daß über die dazu umgeschaltete Umschalteinrichtung U' das Pausensignal anstelle der sonst die Abtasttaktfrequenz (Modulationstaktrate) angebenden Bitgruppe und eine die Pausendauer angebende Bitkombination anstelle der sonst vom Modulatorausgang d' herkommenden Digitalsignalbits in das Signalblockregister BS zur Bildung eines - dann kürzeren - Signalblocks eingebbar ist.

Nachdem zuvor anhand von Fig.1 die Analog/Digital-Umsetzung in einem Ausführungsbeispiel eines Differenz-Modulationssystems gemäß der Erfindung näher erläutert wurde, soll nun noch Fig.2 näher betrachtet werden, die anhand eines Ausführungsbeispiels eines Differenz-Digitaldemodulationssystems gemäß der Erfindung die Digital/Analog-Umsetzung verdeutlicht.

In dem Digitaldemodulationssystem nach Fig.2 mögen Signalblocks, die, wie dies in Fig.3 angedeutet ist, jeweils aus einer Reihe von Digitalsignalbits (1,...253 in Fig.3) zusammen mit einer codiert die jeweilige Abtasttaktfrequenz (Modulationstaktrate) angebenden Bitgruppe (A,...C in Fig.3) bestehen mögen, einem in Fig.2 durch eine Leitung L angedeuteten Übertragungskanal konstanter Bitrate über einen Pufferspeicher P'' entnommen werden; bei Nachrichtenspeicherung, etwa zur Sprachsynthese, können entsprechende Signalblocks direkt aus einem entsprechenden Speicher entnommen werden. Diese Signalblocks gelangen seriell beispielsweise mit einem Bittakt t'' in ein Signalblockregister BE, um dort nach Digitalsignalbits (1,...253 in Fig.3) und Bitgruppe (A,...C in Fig.3) aufgefächert zu werden. In einem Blocktakt T'' wird die Bitgruppe von einem Taktfrequenzspeicher TS'' aufgenommen, um von dort über einen Digital/Analog-Wandler D/A den Taktgenerator TG'' des Digitaldemodulators DEM zu steuern. Dieser Digitaldemodulator DEM kann, ohne daß dies in Fig.2 im einzelnen dargestellt ist, in gleicher Weise aufgebaut sein wie der im ersten Digitalmodulator MO (in Fig.1) enthaltene, von der Digitalsignalleitung d'' zu der Analogsignalleitung a'' führende ΔM-Decoder, was in Fig.2 durch entsprechende Leitungsbezeichnungen d'' und a'' angedeutet ist; dem Digitalsignaleingang d'' des Digitaldemodulators DEM werden die Digitalsignalbits vom Signalblockregister BE her nach Parallel/Serien-Umsetzung über eine Umschalteeinrichtung U'' zur Umsetzung in das am Analogsignalausgang a''

0053243

auftretende Analogsignal zugeführt.

Zusätzlich ist in Fig.2 noch angedeutet, daß auf ein im Signalblockkopf(anstelle einer die Abtasttaktfrequenz codiert angebenden Bitgruppe) stehendes Pausensignal hin eine Pausendecoderschaltung PD entriegelt wird, die für die in dem betreffenden, dann kürzeren Signalblock codiert angegebene Pausendauer die Umschalteeinrichtung U" umschaltet, so daß ein die Digitalsignalbitfolge ...101010... abgebender Pausengenerator Idle mit dem Digitalsignaleingang d" des Digitaldemodulators DEM verbunden wird; auf die ihm damit für die Pausendauer zugeführte idle-Bitfolge ...1010... gibt der $\Delta$M-Decoder DEM ein Analogsignal Null, d.h. eine Analogsignalpause, ab.

20 Patentansprüche
3 Figuren

Patentansprüche

1. Differenz-Digitalmodulations- bzw. -demodulationssystem mit analogsignalabhängigem Abtasttakt, dadurch
gekennzeichnet,
daß bei einer Analog/Digital-Umsetzung das Analogsignal
(a) außer einem dieses in das zu übertragende Digitalsignal umsetzenden, abtasttaktgesteuerten ersten Digitalmodulator (MO) auch einem zweiten prädiktiv arbeitenden
Digitalmodulator (TM) zugeführt wird, aus dessen Schätzfehlersignal (f) ein Steuersignal (s) für den Abtasttaktgenerator (TG) des ersten Digitalmodulators (MO)
gebildet wird, durch das die Taktfrequenz des Abtasttaktgenerators (TG') des ersten Digitalmodulators (MO)
bei zunehmendem Schätzfehler erhöht und umgekehrt bei
abnehmendem Schätzfehler wieder erniedrigt wird,
wobei die vom ersten Digitalmodulator (MO) aus dem Analogsignal (a) gebildeten Digitalsignalbits (1...253) jeweils
zusammen mit einer codiert die jeweilige Abtasttaktfrequenz
angebenden Bitgruppe (A...C) signalblockweise abgegeben
werden,
und/oder daß bei einer Digital/Analog-Umsetzung die
Digitalsignalbits jeweils zusammen mit der codiert die
jeweilige Abtasttaktfrequenz angebenden Bitgruppe signalblockweise vom Digitaldemodulator (DEM) aufgenommen werden, wobei nach Auffächerung von Digitalsignalbits (1...253)
und Bitgruppe (A...C) letztere über einen Taktfrequenzspeicher (TS") den Taktgenerator (TS") des Digitaldemodulators (DEM) steuert, dessen Digitalsignaleingang (d")
die Digitalsignalbits (1...253) zur Umsetzung in das Analogsignal (a") zugeführt werden.


2. Digitalmodulations- bzw. -demodulationssystem nach
Anspruch 1, dadurch gekennzeichnet, daß die Signalblocks
(A...253) einem Übertragungskanal (L) konstanter Bitrate über einen Pufferspeicher (P'; P") zugeführt bzw. entnommen werden.

3. Digitalmodulations- bzw. -demodulationssystem nach Anspruch 1 oder 2, dadurch gekennzeichnet, daß die Signalblocks neben der die Modulationstaktrate angebenden Bitgruppe (A...C) jeweils eine konstante Anzahl von Signalbits (1...253) enthalten.

4. Digitalmodulations- bzw. -demodulationssystem nach Anspruch 1 oder 2, dadurch gekennzeichnet, daß die Signalblocks neben der die Modulationstaktrate angebenden Bitgruppe jeweils eine modulationstaktabhängige Anzahl von Signalbits enthalten.

5. Digitalmodulations- bzw. -demodulationssystem nach einem der Ansprüche 1 bis 4, dadurch gekennzeichnet, daß für eine Analogsignalpause lediglich ein Signalblock abgegeben bzw. aufgenommen wird, der codiert die Pausenlänge angebende Digitalsignalbits zusammen mit einer anstelle einer Abtasttaktfrequenz eine Pause signalisierenden Bitgruppe enthält.

6. Digitalmodulations- bzw. -demodulationssystem nach einem der Ansprüche 1 bis 5, dadurch gekennzeichnet, daß das Schätzfehlersignal (f) quadriert und gleichgerichtet wird und das nach anschließender Tiefpaßfilterung erhaltene Steuersignal (s) den Abtasttaktgenerator (TG') des ersten Digitalmodulators (MO) steuert.

7. Digitalmodulations- bzw. -demodulationssystem nach Anspruch 6, dadurch gekennzeichnet, daß das genannte Steuersignal (s) den Abtasttaktgenerator (TG') des ersten Digitalmodulators (MO) über einen blocktaktgesteuerten Taktfrequenzspeicher (TS') steuert.

8. Digitalmodulations- bzw. -demodulationssystem nach
Anspruch 7, gekennzeichnet durch eine zumindest angenähert
der unteren Grenzfrequenz des Analogsignals entsprechende
Blocktaktfrequenz.

9. Digialmodulations- bzw. -demodulationssystem nach
einem der Ansprüche 6 bis 8, dadurch gekennzeichnet, daß
das genannte Steuersignal (s) auch den Abtasttaktgenerator (TG2) des zweiten Digitalmodulators (TM) steuert.

10. Digitalmodulations- bzw. -demodulationssystem
nach einem der Ansprüche 6 bis 8, dadurch gekennzeichnet,
daß der Abtasttaktgenerator (TG2) des zweiten Digital-
Modulators (TM) mit konstanter, hoher Taktfrequenz arbeitet.

11. Digitalmodulations- bzw. -demodulationssystem nach
einem der Ansprüche 7 bis 10, dadurch gekennzeichnet,
daß mit der Taktfrequenzspeicherung eine Steuersignalumrechnung verbunden ist.

12. Digitalmodulations- bzw. -demodulationssystem nach
einem der vorhergehenden Ansprüche, dadurch gekennzeichnet, daß das Analogsignal (a) dem genannten ersten
Digitalmodulator (MO) über ein die zur Bildung des
genannten Steuersignals (s) benötigte Arbeitszeit überbrückendes Verzögerungsglied ($\tau 1$) zugeführt wird.

13. Digitalmodulations- bzw. -demodulationssystem nach
Anspruch 12, dadurch gekennzeichnet, daß das Verzögerungsglied ($\tau 1$) durch eine Eimerkettenschaltung
gebildet ist.

14. Digitalmodulations- bzw. -demodulationssystem nach
Anspruch 12, dadurch gekennzeichnet, daß das Verzögerungsglied ($\tau 1$) durch eine Kettenschaltung eines
Analog/Digital-Wandlers, eines FIFO-Speichers und
eines Digital-Analog-Wandlers gebildet ist.

0053243

15. Digitalmodulations- bzw. -demodulationssystem nach einem der vorhergehenden Ansprüche, dadurch gekennzeich- et, daß der zweite Digitalmodulator (TM) durch einen Deltamodulator gebildet ist.

. Digitalmodulations- bzw. -demodulationssystem nach pruch 15, dadurch gekennzeichnet, daß der zweite talmodulator (TM) durch einen adaptiven Deltamodulator ldet ist.

Digitalmodulations- bzw. -demodulationssystem nach em der vorhergehenden Ansprüche, dadurch gekennzeich- :, daß der erste Digitalmodulator (MO) durch einen ltamodulator gebildet ist.

18. Digitalmodulations- bzw. -demodulationssystem nach Anspruch 17, dadurch gekennzeichnet, daß der erste Digitalmodulator (MO) durch einen adaptiven Deltamodulator gebildet ist.

19. Digitalmodulations- bzw. -demodulationssystem nach einem der Ansprüche 1 bis 16, dadurch gekennzeichnet, daß der erste Digitalmodulator durch einen Delta-Pulscodemodulator gebildet ist.

20. Digitalmodulations- bzw. -demodulationssystem nach Anspruch 19, dadurch gekennzeichnet, daß der erste Digitalmodulator (MO) durch einen adaptiven Delta-Puls- codemodulator gebildet ist.

FIG 1

FIG 2

FIG 3

0053243

1/1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | US - A - 3 662 266 (LIMB et al.)<br><br>* Spalte 2, Zeilen 26-34; Zeile 60 - Spalte 3, Zeile 1; Zeilen 7-13; Zeile 61 - Spalte 4, Zeile 1; Spalte 6, Zeilen 11-26; Spalte 7, Zeilen 23-44; Spalte 8, Zeilen 24-69 * | 1-3,19 |
| Y | US - A - 3 609 551 (BROWN)<br><br>* Spalte 2, Zeile 39 - Spalte 4, Zeile 17 * | 1,15 |
| P | 1980 NATIONAL TELECOMMUNICATIONS CONFERENCE RECORD, Band 2, 30. November - 4. Dezember 1980, Seiten 36.5.1-36.5.5<br>New York, U.S.A.<br>J.L. LOCICERO et al.: "Doubly adaptive delta modulation for bandwidth compression of speech signals"<br><br>* Seite 36.5.2, linke Spalte, Zeilen 11-36, 44-49 * | 1,12 |

**KLASSIFIKATION DER ANMELDUNG (Int. Cl.³)**

H 04 B 12/04

**RECHERCHIERTE SACHGEBIETE (Int. Cl.³)**

H 04 B 12/04

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-03-1982 | HOLPER |

EPA form 1503.1 06.78